# EUROPEAN PATENT APPLICATION

(11) **EP 2 506 453 A1**
(43) Date of publication of application: **03.10.2012**
(21) Application number: 10840368.4
(22) Date of filing: 11.06.2010
(51) Int. Cl.: H04B 7/24

(54) **WIRELESS RELAY DEVICE AND METHOD FOR COMMUNICATING WITH BASE STATION AND TERMINAL THEREOF**

(30) Priority: 31.12.2009 CN 200910260738
(71) Applicant: ZTE Corporation, Shenzhen, Guangdong 518057 (CN)
(72) Inventor: DIAO, Xinxi, Guangdong 518057 (CN); MA, Zhifeng, Guangdong 518057 (CN); LAI, Zhengrong, Guangdong 518057 (CN); ZHU, Xiaodong, Guangdong 518057 (CN); YANG, Guang, Guangdong 518057 (CN)
(74) Representative: Jansen, Cornelis Marinus
(86) International application number: PCT/CN2010/073832
(87) International publication number: WO 2011/079578

(57) **Abstract**

A wireless relay device includes: a first receiving channel configured to receive signals from a base station or from a base station and a terminal, a second receiving channel configured to receive signals from the terminal, a first sending channel configured to send signals to the base station or to the base station and the terminal, and a second sending channel configured to send signals to the terminal, and further includes a radio frequency control unit configured to, during communicating with the base station and the terminal, control the first receiving channel, the second receiving channel, the first sending channel and the second sending channel to use frequency bands in the following mode: receiving signals synchronously from the base station and the terminal in a first time interval, and sending signals synchronously to the base station and the terminal in a second time interval, wherein the third frequency band and the fifth frequency band are two guard bands between the working frequency band of a Frequency Division Duplex (FDD) system and the second frequency band serving as the working frequency band of a Time Division Duplex (TDD) system. The disclosure realizes the bidirectional relay communication between the base station and the terminal by using an idle guard band, increasing the utilization efficiency and the utilization flexibility of the guard band.

## Description

### TECHNICAL FIELD

The disclosure relates to the field of wireless communications, and in particular to a wireless relay device and a method for the wireless relay device to communicate with a base station and a terminal.

### BACKGROUND

In a conventional Time Division Duplex (TDD) system, an uplink transmission and a downlink transmission share the same frequency band in a time division manner. In a Frequency Division Duplex (FDD) system, in the uplink transmission and the downlink transmission, receiving and sending are performed on two separate symmetrical frequency channels. In order to avoid sending/receiving interference between the TDD system and the FDD system (including a base station and a terminal) deployed at a frequency band adjacent to the frequency band of the TDD system, two ends of the frequency band used by the TDD system must be partially reserved as a guard band.

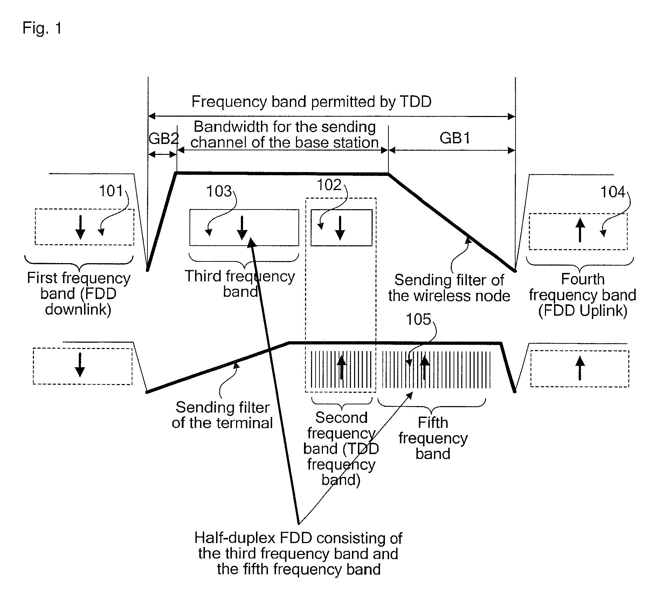

As shown in Fig. 1, a frequency spectrum distribution pattern of the TDD system and the FDD system is as follows: a first frequency band 101 is a downlink frequency band of the FDD system; a second frequency band 102 is a frequency band used by the TDD system; a third frequency band 103 is a guard band between the first frequency band 101 and the second frequency band 102; a fourth frequency band 104 is an uplink frequency band of the FDD system; and a fifth frequency band 105 is a guard band between the fourth frequency band 104 and the second frequency band 102.

In the case where the TDD system and the FDD system employ different base station locations to construct networks, in terms of inhibiting transmission interference between the TDD base station and the FDD base station, only a relatively narrow guard band is needed between the TDD system and the adjacent FDD system as the interference signal between the TDD base station and the FDD base station is subjected to a space attenuation, and typically, the bandwidth of a unilateral guard band is less than 3MHz. However, in order to reduce cost in constructing the network and alleviate difficulties in selecting the station location, in the future network deployment, the operators need to make a TDD base station (or a radio frequency unit) and an FDD base station (or a radio frequency unit) share the same base station or even share the same antenna. In this case, in order to inhibit the interference between the TDD base station and the FDD base station, it is required to reserve a relatively wide guard band. Typically, the bandwidth of the unilateral guard band is larger than 10MHz. The larger the bandwidth of the reserved guard band is, the lower the utilization rate of the frequency spectrum resource is.

The patent application WO20070286156, which is entitled 'Utilizing guard band between FDD and TDD wireless systems', provides a method for utilizing a guard band and also discloses a wireless network, which includes: an FDD system operating within a first frequency band 101 provides at least a first FDD channel, a TDD system operating within a second frequency band 102 provides at least a first TDD channel, the first frequency band 101 and the second frequency band 102 are separated by a third frequency band 103, and an H-FDD system operating within the third frequency band 103 provides at least a first H-TDD channel, and a transmission of the first H-TDD channel may be synchronized with one of an uplink transmission and a downlink transmission of the first TDD channel; the FDD system is further provided with at least a second FDD channel within a fourth frequency band 104, wherein the fourth frequency band 104 is separated from the second frequency band 102 by a fifth frequency band 105, and the H-FDD is further provided with a second H-FDD channel within the fifth frequency band 105. The method for utilizing the guard band provided in this patent application is disadvantaged in that: the third frequency band 103 which can only be used as a unilateral downlink (or uplink) is under-utilized when an uplink (or downlink) transmission is carried out at the fifth frequency band 105 and the second frequency band 102. Likewise, the fifth frequency band 105 which can only be used as a unilateral uplink (or downlink) is under-utilized when a downlink (or uplink) transmission is carried out at the third frequency band 103 and the second frequency band 102. As a consequence, the utilization rate of the third frequency band 103 and the fifth frequency band 105 is only 50%.

At present, there is no excellent solution in how to effectively utilize a guard band between a TDD base station and an FDD base station, which results in a waste of frequency resource.

### SUMMARY

The disclosure provides a wireless relay device and a method for the wireless relay device to communicate with a base station and a terminal, to address the problem of waste of a guard band existing in the prior art.

The disclosure provides a wireless relay device, which includes: a first receiving channel configured to receive signals from a base station or from the base station and a terminal, a second receiving channel configured to receive signals from the terminal, a first sending channel configured to send signals to the base station or to the base station and the terminal, and a second sending channel configured to send signals to the terminal, and further includes:

a radio frequency control unit, configured to, during communicating with the base station and the terminal, control the first receiving channel, the second receiving channel, the first sending channel and the second sending channel to use frequency bands in the following mode:

the first receiving channel receives signals at a third frequency band or at the third frequency band and a second frequency band;

the second receiving channel receives signals at a fifth frequency band or at the fifth frequency band and the second frequency band;

the first sending channel sends signals at the fifth frequency band or at the fifth frequency band and the second frequency band; and

the second sending channel sends signals at the third frequency band or at the third frequency band and the second frequency band;

wherein there is a first time interval during the control of the radio frequency control unit, in the first time interval, the radio frequency control unit controls the receiving channel to receive signals synchronously from the base station and the terminal; and there is a second time interval during the control of the radio frequency control unit, in the second time interval, the radio frequency control unit controls the sending channel to send signals synchronously to the base station and the terminal,

wherein the third frequency band and the fifth frequency band are two guard bands between a working frequency band of a FDD system and the second frequency band serving as a working frequency band of a TDD system.

The radio frequency control unit may be configured to control the first receiving channel, the second receiving channel, the first sending channel and the second sending channel in any one of the following modes:

mode 1: in the first time interval, controlling the first receiving channel to receive signals from the base station at the third frequency band and synchronously controlling the second receiving channel to receive signals from the terminal at the fifth frequency band; and

in the second time interval, controlling the first sending channel to send signals to the base station at the fifth frequency band and synchronously controlling the second sending channel to send signals to the terminal at the third frequency band;

mode 2: in the first time interval, controlling the first receiving channel to receive signals from the base station at the third frequency band and synchronously controlling the second receiving channel to receive signals from the terminal at the fifth frequency band; and

in the second time interval, controlling the first sending channel to send signals synchronously to the base station and the terminal at the fifth frequency band;

mode 3: in the first time interval, controlling the first receiving channel to receive signals synchronously from the base station and the terminal at the third frequency band; and

in the second time interval, controlling the first sending channel to send signals to the base station at the fifth frequency band and synchronously controlling the second sending channel to send signals to the terminal at the third frequency band;

mode 4: in the first time interval, controlling the first receiving channel to receive signals synchronously from the base station and the terminal at the third frequency band, and

in the second time interval, controlling the first sending channel to send signals to the base station at the second frequency band or at the second frequency band and the fifth frequency band and controlling the second sending channel to send signals to the terminal at the third frequency band; and

mode 5: in the first time interval, controlling the first receiving channel to receive signals synchronously from the base station and the terminal at the third frequency band or at the second frequency band and the third frequency band; and

in the second time interval, controlling the first sending channel to send signals to the base station at the second frequency band or at the second frequency band and the fifth frequency band and synchronously controlling the second sending channel to send signals to the terminal at the third frequency band.

The first receiving channel and the second receiving channel may be two independent receiving channels which respectively receive signals through different power amplifiers; or

the first receiving channel and the second receiving channel may be different sub-channels of the same broadband amplifier which covers the second frequency band, the third frequency band and the fifth frequency band.

The first sending channel and the second sending channel may be two independent sending channels which respectively send signals through different power amplifiers; or

the first sending channel and the second sending channel may be different sub-channels of the same broadband amplifier which covers the second frequency band, the third frequency band and the fifth frequency band.

The radio frequency control unit may include:

a radio frequency switch switching control unit, configured to determine the frequency bands used by the first receiving channel, the second receiving channel, the first sending channel and the second sending channel, and link relationships with antennas, and to send a switching control signal for controlling switching between different frequency bands and switching between links with the antennas; and

a radio frequency switch unit, configured to switch between the frequency bands used by the first receiving channel, the second receiving channel, the first sending channel and the second sending channel and switch between the link relationships with the antennas according to the switching control signal.

The radio frequency switch unit may be configured to switch in the following mode:

switching between an antenna for the base station and an antenna for the terminal by the first receiving channel;

switching between the antenna for the base station and the antenna for the terminal by the first sending channel;

switching between sending to the terminal and receiving from the terminal at the third frequency band by the first receiving channel and the second sending channel; and

switching between sending to the terminal and receiving from the terminal at the fifth frequency band by the first sending channel and the second receiving channel.

The radio frequency switch switching control unit may be configured to determine the used frequency band and the link relationship with the antenna according to the following information:

a bandwidth for communication between the wireless relay device and the terminal;

a bandwidth for communication between the wireless relay device and the base station; and

uplink-downlink time slot conversion points for a first wireless frame between the wireless relay device and the base station and a second wireless frame between the wireless relay device and the terminal.

The wireless relay device may further include: an antenna unit configured to implement signal sending and receiving for the base station and the terminal, wherein

the antenna unit is one or a group of omni-directional antennas of which the frequency band covers the second frequency band, the third frequency band or the fifth frequency band; or

the antenna unit includes: one or a group of directional antennas for the base station, of which the frequency band covers the second frequency band, the third frequency band and the fifth frequency band, and one or a group of directional antennas for the terminal, of which the frequency band covers the second frequency band, the third frequency band and the fifth frequency band.

The disclosure further provides a method for the wireless relay device as described above to communicate with a base station and a terminal, which includes:

communicating by comprehensively using a second frequency band, a third frequency band and a fifth frequency band, wherein the wireless relay device receives signals synchronously from the base station and the terminal in a first time interval, and sends signals synchronously to the base station and the terminal in a second time interval.

The step of communicating by comprehensively using the second frequency band, the third frequency band and the fifth frequency band may employ any one of the following communication modes:

mode 1: in the first time interval, receiving signals from the base station at the third frequency band and synchronously receiving signals from the terminal at the fifth frequency band; and

in the second time interval, sending signals to the base station at the fifth frequency band and synchronously sending signals to the terminal at the third frequency band;

mode 2: in the first time interval, receiving signals from the base station at the third frequency band and synchronously receiving signals from the terminal at the fifth frequency band; and

in the second time interval, sending signals synchronously to the base station and the terminal at the fifth frequency band;

mode 3: in the first time interval, receiving signals synchronously from the base station and the terminal at the third frequency band; and

in the second time interval, sending signals to the base station at the fifth frequency band and synchronously sending signals to the terminal at the third frequency band;

mode 4: in the first time interval, receiving signals synchronously from the base station and the terminal at the third frequency band; and

in the second time interval, sending signals to the base station at the second frequency band or at the second frequency band and the fifth frequency band and sending signals to the terminal at the third frequency band; and

mode 5: in the first time interval, receiving signals synchronously from the base station and the terminal at the third frequency band or at the second frequency band and the third frequency band; and

in the second time interval, sending signals to the base station at the second frequency band or at the second frequency band and the fifth frequency band and synchronously sending signals to the terminal at the third frequency band.

The disclosure further provides another wireless relay device, which includes: a first receiving channel configured to receive signals from a base station or from the base station and a terminal, a second receiving channel configured to receive signals from the terminal, a first sending channel configured to send signals to the base station or to the base station and the terminal, a second sending channel configured to send signals to the terminal, and further includes:

a radio frequency control unit, configured to, during communicating with the base station and the terminal, control the first receiving channel, the second receiving channel, the first sending channel and the second sending channel to use frequency bands in the following mode:

the first receiving channel receives signals at a third frequency band or at the third frequency band and a second frequency band;

the second receiving channel receives signals at a fifth frequency band or at the fifth frequency band and the second frequency band;

the first sending channel sends signals at the fifth frequency band or at the fifth frequency band and the second frequency band; and

the second sending channel sends signals at the third frequency band or at the third frequency band and the second frequency band; and

wherein the radio frequency control unit controls receiving of first data from the base station in a first time interval, and sending of the first data to the terminal in a second time interval, and receiving of second data from the terminal in a third time interval, and sending of the second data to the base station in a fourth time interval, wherein the third frequency band is used synchronously in the second time interval and the third time interval or the fifth frequency band is used synchronously in the second time interval and the third time interval, and the third frequency band and the fifth frequency band are two guard bands between a working frequency band of an FDD system and the second frequency band serving as a working frequency band of a TDD system.

The radio frequency control unit may be configured to control the first receiving channel, the second receiving channel, the first sending channel and the second sending channel in the following mode:

in the first time interval, controlling the first receiving channel to receive the first data from the base station at the third frequency band;

in the second time interval, controlling the second sending channel to send the first data to the terminal at the third frequency band or controlling the first sending channel to send the first data to the terminal at the fifth frequency band;

in the third time interval, controlling the first receiving channel to receive the second data from the terminal at the third frequency band which is the same as that used in the second time interval or controlling the second receiving channel to receive the second data from the terminal at the fifth frequency band which is the same as that used in the second time interval; and

in the fourth time interval, controlling the first sending channel to send the second data to the base station at the fifth frequency band or controlling the first sending channel to send the second data to the base station at the second frequency band and the fifth frequency band.

The disclosure further provides another method for the wireless relay device as described above to communicate with a base station and a terminal, which includes: communicating by comprehensively using a second frequency band, a third frequency band and a fifth frequency band, wherein

receiving first data from the base station in a first time interval;

sending the first data to the terminal in a second time interval;

receiving second data from the terminal in a third time interval;

sending the second data to the base station in a fourth time interval;

wherein the third frequency band is used synchronously in the second time interval and the third time interval or the fifth frequency band is used synchronously in the second time interval and the third time interval.

The step of communicating by comprehensively using the second frequency band, the third frequency band and the fifth frequency band may include:

receiving the first data from the base station at the third frequency band in the first time interval;

sending the first data to the terminal at the third frequency band or the fifth frequency band in the second time interval;

receiving, in the third time interval, the second data from the terminal at the third frequency band or the fifth frequency band which is the same as that used in the second time interval; and

sending the second data to the base station at the fifth frequency band or at the second frequency band and the fifth frequency band in the fourth time interval.

The first time interval and the second time interval may be different downlink time slots in one wireless frame period, and the third time interval and the fourth time interval are different uplink time slots in one wireless frame period.

In the steps of sending the first data to the terminal at the third frequency band in the second time interval and receiving the second data from the terminal at the third frequency band in the third time interval,

a bandwidth used to send the first data to the terminal at the third frequency band may be the same as that used to receive the second data from the terminal at the third frequency band, wherein the terminal may work in a TDD mode; or

the bandwidth used to sent the first data to the terminal at the third frequency band may be greater than that used to receive the second data from the terminal at the third frequency band, wherein the terminal may work in the TDD mode.

In the steps of sending the first data to the terminal at the fifth frequency band in the second time interval and receiving the second data from the terminal at the fifth frequency band in the third time interval,

a bandwidth used to send the first data to the terminal at the fifth frequency band may be the same as that used to receive the second data from the terminal at the fifth frequency band, wherein the terminal works in a TDD mode; or

the bandwidth used to sent the first data to the terminal at the fifth frequency band may be less than that used to receive the second data from the terminal at the fifth frequency band, wherein the terminal works in the TDD mode.

The disclosure is advantaged in that: through deploying a wireless relay device at a guard band between a TDD system and an FDD system, the bidirectional relay communication between a base station and a terminal is realized by using an idle guard band, which increases the utilization efficiency and the utilization flexibility of the the guard band.

### BRIEF DESCRIPTION OF THE DRAWINGS

Fig. 1 is a frequency spectrum distribution pattern used by a TDD system and an FDD system in the prior art;

Fig. 2 is a diagram illustrating the structure of a wireless relay device according to an embodiment of the disclosure;

Fig. 3 is a schematic diagram illustrating a signal flow and use of frequency spectrums in the case in which a wireless relay device communicates with a base station and a terminal according to the second embodiment of the disclosure;

Fig. 4a is a schematic diagram illustrating configuration of a wireless frame when the wireless relay device receives signals synchronously from the base station and the terminal according to the second embodiment of the disclosure;

Fig. 4b is a schematic diagram illustrating configuration of a wireless frame when the wireless relay device sends signals synchronously to the base station and the terminal according to the second embodiment of the disclosure;

Fig. 5 is a schematic diagram illustrating a signal flow and use of frequency spectrums in the case in which a wireless relay device communicates with a base station and a terminal according to the fourth embodiment of the disclosure;

Fig. 6 is a schematic diagram illustrating wireless frames using the same air interface according to the fourth embodiment of the disclosure.

### DETAILED DESCRIPTION

A wireless relay device and a method for the wireless relay device to communicate with a base station and a terminal provided by the disclosure are described below in detail with reference to accompanying drawings in conjunction with embodiments.

Seen from the evolution tendency of a future wireless access network, in order to improve coverage quality and system capacity of a macro cell, a relay or an indoor base station (or indoor wireless gateway) will be the wireless relay device generally employed by the further wireless access network. The disclosure improves the utilization rate of a guard band by combining the utilization of the guard band with deployment of the wireless relay device. The disclosure further provides a method for allocating frequency spectrum resource reasonably between a wireless access point covered by the macro cell and a wireless relay covered by a micro cell.

Specifically, for a network construction mode in which a wireless node Access Point (AP) of a macro cell and a wireless relay of a micro cell are deployed at a TDD frequency spectrum, the guard band between frequency spectrums used by a TDD system and an FDD system is used for deploying a wireless relay device of a micro cell, which provides a new technical approach for effective utilization of the guard band, thus the disclosure reduces utilization efficiency of a TDD frequency spectrum and the performance requirement on a radio frequency filter used in a network where the TDD system and the FDD system share the same base station or the same antenna, and lowers the system cost.

The wireless relay device and the method for the wireless relay device to communicate with the base station and the terminal provided by the disclosure are suitable for the frequency spectrum distribution pattern of the TDD system and the FDD system shown in Fig. 1, wherein a first frequency band 101 is a downlink frequency band of the FDD system, a second frequency band 102 is a frequency band used by the TDD system, a third frequency band 103 is a unilateral guard band between the first frequency band 101 and the second frequency band 102, a fourth frequency band 104 is an uplink frequency band of the FDD system, and a fifth frequency band 105 is a unilateral guard band between the fourth frequency band 104 and the second frequency band 102.

A wireless relay device is provided in accordance with the first embodiment of the disclosure.

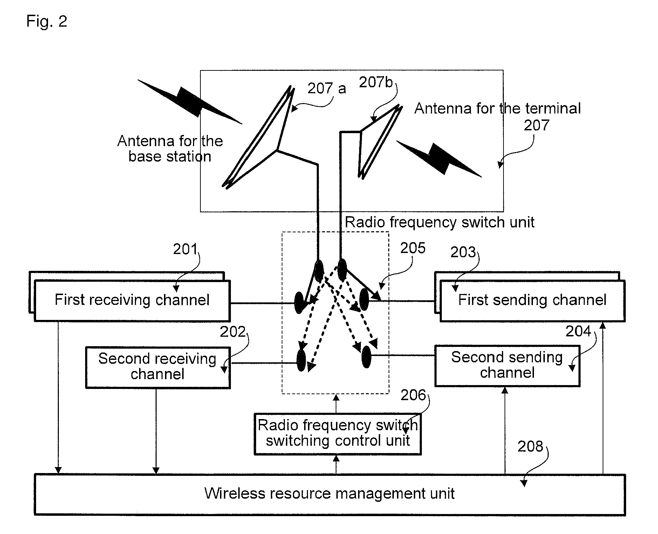

The wireless relay device provided in the embodiment, as shown in Fig. 2, includes:

a first receiving channel 201 configured to receive signals from a base station or from a base station and a terminal, namely the first receiving channel 201 has two receiving modes: a unidirectional receiving mode in which signals are received from the base station, and a bidirectional receiving mode in which signals are received synchronously from the base station and the terminal; and a receiving channel having the two receiving modes is referred to as the first receiving channel;

a second receiving channel 202 configured to receive signals from the terminal, namely the second receiving channel 202 has only one unidirectional receiving mode in which signals are received from the terminal only, and a receiving channel having one such unidirectional receiving mode is referred to as the second receiving channel 202;

a first sending channel 203 configured to send signals to the base station or to the base station and the terminal, namely the first sending channel 203 has two sending modes: a unidirectional sending mode in which signals are sent to the base station, and a bidirectional sending mode in which signals are sent synchronously to the base station and the terminal; and a sending channel having the two sending modes is referred to as the first sending channel 203;

a second sending channel 204 configured to send signals to the terminal, namely the second receiving channel 204 has only one sending mode in which signals are sent to the terminal only, and a sending channel having one such unidirectional sending mode is referred to as the second sending channel 204; and

a radio frequency control unit configured to, during communicating with the base station and the terminal, control the first receiving channel 201, the second receiving channel 202, the first sending channel 203 and the second sending channel 204 to use frequency bands in the following mode:

the first receiving channel 201 receives signals at the third frequency band 103 or at the third frequency band 103 and the second frequency band 102; as the first receiving channel 201 has two receiving modes, both of the two receiving modes can employ such frequency band utilization way;

the second receiving channel 202 receives signals at the fifth frequency band 105 or at the fifth frequency band 105 and the second frequency band 102;

the first sending channel 203 sends signals at the fifth frequency band 105 or at the fifth frequency band 105 and the second frequency band 102; similarly, as the first sending channel 203 has two sending modes, both of the two sending modes can employ such frequency band utilization way;

the second sending channel 204 sends signals at the third frequency band 103 or at the third frequency band 103 and the second frequency band 102;

wherein there is a first time interval in which signals are received synchronously from the base station and the terminal, and there is a second time interval in which signals are synchronously sent to the base station and the terminal; as mentioned above, the third frequency band 103 and the fifth frequency band 105 are two unilateral guard bands between the working frequency band of an FDD system and the second frequency band serving as the working frequency band of an TDD system.

Embodiments of the disclosure are applicable to the communication between a base station which sends and receives signals in different uplink and downlink time slots and a terminal which sends and receives signals in different uplink and downlink time slots. When communicating with the base station and the terminal, the wireless relay device uses the time slot of a first wireless frame on an air interface from the base station to the wireless relay device and the time slot of a second wireless frame on the air interface from the relay to the terminal, specifically, the wireless relay device synchronously receives signals bidirectionally in a first time interval using the downlink time slot of a first wireless frame and the uplink time slot of a second wireless frame, and synchronously sends signals bidirectionally using the uplink time slot of a first wireless frame and the downlink time slot of a second wireless frame. The disclosure is especially applicable for the case in which a first wireless frame on the air interface from the base station to the wireless relay device is synchronous in time with a second wireless frame on the air interface from the relay to the terminal, namely the case in which the uplink time slot of the first wireless frame is overlapped with the downlink time slot of the second wireless frame, and the downlink time slot of the first wireless frame is overlapped with the uplink time slot of the second wireless frame. In order to prevent interference to the terminal directly communicating with the base station during the process in which the wireless relay device sends data synchronously to the terminal and the base station and receives data synchronously from the terminal and the base station, a time slot is specifically allocated to the terminal which communicates with the base station via the wireless relay device, namely the time slot allocated to the terminal which communicates with the base station via the wireless relay device is different from the time slot allocated to the terminal which directly communicates with the base station.

The description on the wireless delay device according to the disclosure, provides description on the receiving and sending modes of the first receiving channel 201, the second receiving channel 202, the first sending channel 203 and the second sending channel 204 respectively as well as the frequency bands used in these receiving and sending modes, and specifically during the process in which data is synchronously sent to the terminal and the base station or synchronously received from the terminal and the base station, the receiving and sending modes of each channel and the frequency bands used in the modes can be selected flexibly; specifically, the receiving and sending modes of each channel and the frequency bands used in the modes are controlled by a radio frequency control unit; several preferred embodiments of the radio frequency control unit are provided below, wherein the radio frequency control unit is specifically used for, during communicating with the base station and the terminal, performing controlling in any one of the following modes:

mode 1: in the first time interval, controlling the first receiving channel 201 to receive signals from the base station at the third frequency band 103 and synchronously controlling the second receiving channel 202 to receive signals from the terminal at the fifth frequency band 105; and

in the second time interval, controlling the first sending channel 203 to send signals to the base station at the fifth frequency band 105 and synchronously controlling the second sending channel 204 to send signals to the terminal at the third frequency band 103;

in this mode, the third frequency band 103 and the fifth frequency band 105 are unidirectionally used for the base station or the terminal, and the use of the third frequency band 103 and the fifth frequency band 105 is the same as that in the macro cell covering third frequency band 103 and the fifth frequency band 105, but the two guard bands are synchronously used in the first time interval and the second time interval, which is different from the prior art in which only one guard band is used in one time interval;

mode 2: in the first time interval, controlling the first receiving channel 201 to receive signals from the base station at the third frequency band 103 and synchronously controlling the second receiving channel 202 to receive signals from the terminal at the fifth frequency band 105; and

in the second time interval, controlling the first sending channel 203 to send signals synchronously to the base station and the terminal at the fifth frequency band 103;

in this mode, in the first time interval, receiving signals synchronously from the base station and the terminal is performed by using unidirectionality of the third frequency band 103 and the fifth frequency band 105, in the first time interval; and in the second time interval, the fifth frequency band 105 is bidirectionally used; the third frequency band 103 and the fifth frequency band 105 are synchronously used in one time interval, namely the first time interval, and the utilization rate of the guard band is increased;

mode 3: in the first time interval, controlling the first receiving channel 201 to receive signals synchronously from the base station and the terminal at the third frequency band 103; and

in the second time interval, controlling the first sending channel 203 to send signals to the base station at the fifth frequency band 105 and synchronously controlling the second sending channel 204 to send signals to the terminal at the third frequency band 103;

in this mode, the third frequency band 103 is bidirectionally used in the first time interval, and signals are sent synchronously to the base station and the terminal by using unidirectionality of the third frequency band 103 and the fifth frequency band 105 in the second time interval; as the third frequency band 103 and the fifth frequency band 105 are synchronously used in one time interval, namely the second time interval, the utilization rate of the guard band is increased;

mode 4: in the first time interval, controlling the first receiving channel 201 to receive signals synchronously from the base station and the terminal at the third frequency band 103; and

in the second time interval, controlling the first sending channel 203 to send signals to the base station at the second frequency band 102 or at the second frequency band 102 and the fifth frequency band 105, and controlling the second sending channel 204 to send signals to the terminal at the third frequency band 103;

in this mode, the third frequency band 103 is bidirectionally used in the first time interval, and in the second time interval, in addition to sending signals synchronously to the base station and the terminal by using the unidirectionality of the third frequency band 103 and the fifth frequency band 105 as that in the above-mentioned mode 3, the second frequency band 102 is also used to send signals to the base station; as no time slot conflict occurs, combining the use of the guard band and the use of the second frequency band increases the utilization rate of the frequency band in the case in which direct communicating with the base station and communicating with the base station via the wireless relay device are not influenced; and

mode 5: in the first time interval, controlling the first receiving channel 201 to receive signals synchronously from the base station and the terminal at the third frequency band 103 or at the second frequency band 102 and the third frequency band 103; and

in the second time interval, controlling the first sending channel 203 to send signals to the base station at the second frequency band 102 or at the second frequency band 102 and the fifth frequency band 105, and synchronously controlling the second sending channel 204 to send signals to the terminal at the third frequency band 103;

in this mode, the second frequency band 102 is introduced in both the data transmission to the base station and the data transmission to the terminal; the utilization rate of the frequency band is further increased in the case in which direct communicating with the base station and communicating with the base station via the wireless relay device are not influenced.

Only the aforementioned five control ways are provided in the embodiment, however, it should be appreciated that based on the receiving and sending modes of the first receiving channel 201, the second receiving channel 202, the first sending channel 203 and the second sending channel 204 and the frequency bands for use in these receiving and sending modes that are defined herein, one of the receiving modes of the first receiving channel 201 and one of the sending modes of the first sending channel 203 can be used during the process of synchronously sending and receiving data on condition that communicating with the base station directly and communicating with the base station via the wireless relay device are not influenced. The second receiving channel 203 and the second sending channel 204 may be closed in the case in which the first receiving channel 201 adopts a bidirectional receiving mode and the first sending channel 203 adopts a bidirectional sending mode; and the second receiving channel 203 and the second sending channel 204 are required to be opened in the case in which the first receiving channel 201 adopts a unidirectional receiving mode and the first sending channel 203 adopts a unidirectional sending mode. Other frequency band using ways and other receiving and sending modes can be obtained flexibly in addition to those mentioned in the above-mentioned five control ways, and such frequency band using ways and other receiving and sending modes, which are not listed in detail herein, shall be included in the protection scope of the disclosure.

Furthermore, the above description provides the receiving and sending modes of the first receiving channel 201, the second receiving channel 202, the first sending channel 203 and the second sending channel 204 and the frequency bands for use in these receiving and sending modes which are defined to implement the disclosure; certainly, in actual use, the first receiving channel 201, the second receiving channel 202, the first sending channel 203 and the second sending channel 204 can be configured flexibly and defined in different ways to realize corresponding functions or even to be configured with more functions. Two configuration and definition modes are provided below.

Configuration mode 1 of receiving channels:

in the basic mode, the first receiving channel receives signals at the third frequency band 103; further, in order to improve the utilization flexibility of the receiving channel, the first receiving channel can be configured to receive signals at one of the fifth frequency band 105, the third frequency band 103 and the second frequency band 102 or combination of the above frequency bands;

when receiving signals at the third frequency band 103, the first receiving channel may be configured to receive signals from the base station; when receiving signals at the second frequency band 102, the first receiving channel may be configured to receive signals from the base station or to receive signals from the terminal; when receiving signals at the fifth frequency band 105, the first receiving channel may be configured to receive signals from the terminal; and the specific working frequency band of the first receiving channel is controlled by the radio frequency switch switching control unit;

in the basic mode, the second receiving channel receives signals at the fifth frequency band 105; further, in order to improve the utilization flexibility of the channel, the second receiving channel may be configured to receive signals at one of the fifth frequency band 105, the third frequency band 103 and the second frequency band 102 or the combination of these frequency bands;

when receiving signals at the third frequency band 103, the second receiving channel may be configured to receive signals from the base station; when receiving signals at the second frequency band 102, the second receiving channel may be configured to receive signals from the base station or the terminal; when receiving signals at the fifth frequency band 105, the second receiving channel may be configured to receive signals from the terminal; and the specific working frequency band of the second receiving channel is controlled by the radio frequency switch switching control unit 206.

Configuration mode 2 of receiving channels:

the first receiving channel or the second receiving channel receives signals from an antenna 207a for the base station, at the same time the second receiving channel or the first receiving channel receives signals from an antenna 207b for the terminal; the first receiving channel or the second receiving channel receives signals from the antenna 207a for the base station at one of the following frequency bands: the third frequency band 103, the second frequency band 102, or a combination of the second frequency band 102 and the third frequency band 103. The first receiving channel or the second receiving channel receives signals from the antenna 207b for the terminal at one of the following frequency bands: the second frequency band 102, the third frequency band 103, or a combination the second frequency band 102 and the third frequency band 103.

Configuration mode 1 of sending channels:

in the basic mode, the first sending channel sends signals at the fifth frequency band 105; further, in order to improve the use flexibility of the first sending channel, the first sending channel may be configured to send signals at one of the fifth frequency band 105, the third frequency band 103 and the second frequency band 102 or a combination of these frequency bands;

when sending signals at the third frequency band 103, the first sending channel may be configured to send signals to the terminal; when sending signals at the second frequency band 102, the first sending channel may be configured to send signals to the base station or to receive signals from the terminal; when sending signals at the fifth frequency band, the first sending channel may be configured to send signals to the base station; and the specific working frequency band of the first sending channel is controlled by the radio frequency switch switching control unit 206;

in the basic mode, the second sending channel sends signals at the third frequency band 103; further, in order to improve the utilization flexibility of the second sending channel, the second sending channel may be configured to send signals at one of the fifth frequency band 105, the third frequency band 103 and the second frequency band 102 or a combination of these frequency bands;

when sending signals at the third frequency band 103, the second sending channel may be configured to send signals to the terminal; when sending signals at the second frequency band 102, the second sending channel may be configured to send signals to the base station or to receive signals from the terminal; when sending signals at the fifth frequency band 105, the second sending channel may be configured to send signals to the base station; and the specific working frequency band of the second sending channel is controlled by the radio frequency switch switching control unit 206.

Configuration mode 2 of sending channels:

the first sending channel or the second sending channel sends signals on an antenna 207a for the base station, at the same time the second sending channel or the first sending channel sends signals on an antenna 207b for the terminal. The first sending channel or the second sending channel sends signals on the antenna 207a for the base station at one of the following frequency bands: the second frequency band 102, the fifth frequency band 105, or a combination of the second frequency band 102 and the fifth frequency band 105; the first sending channel or the second sending channel sends signals on the antenna 207b for the terminal at one of the following frequency bands: the second frequency band 102, the fifth frequency band 105, or a combination of the second frequency band 102 and the fifth frequency band 105.

The configuration and the definition modes of the receiving channel are not limited to the above-mentioned modes; in a broad sense, only one sending channel and one receiving channel are needed during the communication of the wireless relay device with the base station and the terminal; in this case, both the sending channel and the receiving channel can be simplified, and in the most basic configuration form, there is only one receiving channel and one sending channel. The disclosure defines the first receiving channel 201, the second receiving channel 202, the first sending channel 203 and the second sending channel 204 specifically in terms of receiving and sending modes and the use of the frequency band.

In specific implementation, the first receiving channel 201 and the second receiving channel 202 according to the disclosure are two independent receiving channels which receive signals through different power amplifiers respectively, wherein one of the power amplifiers covers the third frequency band 103 and the second frequency band 102, and the other power amplifier covers the fifth frequency band 105 and the second frequency band 102; or the first receiving channel 201 and the second receiving channel 202 are two different sub-channels of the same broadband amplifier, which covers the second frequency band 102, the third frequency band 103 and the fifth frequency band 105.

The first sending channel 203 and the second sending channel 204 are two independent sending channels which send signals through different power amplifiers respectively, wherein one of the power amplifiers covers the third frequency band 103 and the second frequency band 102, and the other power amplifier covers the fifth frequency band 105 and the second frequency band 102; or the first sending channel 203 and the second sending channel 204 are two different sub-channels of the same broadband amplifier, which covers the second frequency band 102, the third frequency band 103 and the fifth frequency band 105.

As shown in Fig. 2, in this embodiment, the radio frequency control unit specifically includes:

a radio frequency switch switching control unit 206, configured to determine the frequency bands used by the first receiving channel 201, the second receiving channel 202, the first sending channel 203 and the second sending channel 203 and link relationships with the antennas and to send a switching control signal to a radio frequency switch unit 205; namely the radio frequency switch switching control unit 206 is configured to send, according to specific receiving and sending modes employed by the first receiving channel 201, the second receiving channel 202, the first sending channel 203 and the second sending channel 203, a signal for controlling the link between these channels and antennas to control switching between different receiving and sending modes and switching between the used frequency bands; and

a radio frequency switch unit 205, configured to switch, according to the switching control signal sent by the radio frequency switch switching control unit 206, the radio frequency link state between the channels (the first receiving channel, the second receiving channel, the first sending channel, the second sending channel) and antennas. The switching between different receiving; the switching between different sending and receiving modes and the switching between the used frequency bands can be controlled.

Preferably, the switching performed by the radio frequency switch unit 205 specifically includes: a switching between an antenna for the base station and an antenna for the terminal by the first receiving channel 201, for example, a switching to the antenna for the base station during unidirectional receiving, and a switching to the antenna for the base station and the antenna for the terminal during bidirectional receiving; a switching between the antenna for the base station and the antenna for the terminal by the first sending channel 202, for example, a switching to the antenna for the base station during unidirectional sending, and a switching to the antennas for the base station and the antenna for the terminal during bidirectional sending; a switching between receiving from the terminal and sending to the terminal at the third frequency band 103 by the first receiving channel 201 and the second sending channel 204, for example, the time slot used for sending to the terminal at the third frequency band 103 by the first receiving channel 201 during bidirectional sending is different from that used for receiving from the terminal at the third frequency band 103 by the second sending channel 204, therefore the switching is needed; and a switching between receiving from the terminal and sending to the terminal at the fifth frequency band 105 by the first sending channel 203 and the second receiving channel 202, for example, the time slot used for sending to the terminal at the fifth frequency band 105 by the first sending channel 203 during bidirectional sending is different from that used for sending to the terminal at the fifth frequency band 105 by the second receiving channel 202, therefore the switching is needed.

The radio frequency switch unit 205 specifically consists of a single-pole multi-throw radio frequency switch connected with the first receiving channel 201, the second receiving channel 202, the first sending channel 203 and the second sending channel 204, or employs structure of a multi-pole multi-throw radio frequency switch in the case in which the wireless relay device employs a multi-antenna transmission architecture.

In this embodiment, the radio frequency switch switching control unit 206 is connected with a wireless resource management unit 208 to obtain available second frequency band 102, third frequency band 103, fifth frequency band 105, and uplink and downlink time slots; specifically, in order to determine the sending and receiving modes and the bandwidths used by the first receiving channel 201, the second receiving channel 202, the first sending channel 203 and the second sending channel 204 and to send a switching control signal to the radio frequency switch unit 205, the used frequency bands and the link relationships with the antennas are determined according to the information below:

the bandwidth for the communication between the wireless relay device and the terminal, namely the bandwidth for the first receiving channel 201 or the second receiving channel 202 to receive signals from the terminal and the bandwidth for the first sending channel 202 or the second sending channel 203 to send signals to the terminal;

the bandwidth for the communication between the wireless relay device and the base station, namely the bandwidth for the first receiving channel 201 to receive signals from the base station and the bandwidth for the first sending channel 202 to send signals to the base station; and

uplink-downlink time slot conversion points for a first wireless frame between the wireless relay device and the base station and a second wireless frame between the wireless relay device and the terminal; these conversion points are determined so as to control the synchronous receiving of signals in the first time interval and the synchronous sending of signals in the second time interval.

The wireless relay device further includes an antenna unit 207 which includes an antenna 207a for the base station and an antenna 207b for the terminal, wherein the antenna unit 207 refers to one omni-directional antenna or a group of omni-directional antennas, which may be for the base station and the terminal, and of which the frequency bands cover the second frequency band 102, the third frequency band 103 and the fifth frequency band 105; or the antenna unit 207 includes one directional antenna or a group of directional antennas, which may be for the base station, and of which the frequency bands cover the second frequency band 102, the third frequency band 103 and the fifth frequency band 105, and one directional antenna or a group of directional antennas, which may for the terminal, and of which the frequency bands cover the second frequency band 102, the third frequency band 103 and the fifth frequency band 105.

In accordance with the second embodiment of the disclosure, a method for the wireless relay device provided in the first embodiment to communicate with a base station and a terminal is provided.

The method for the wireless relay device to communicate with the base station and the terminal provided in the embodiment, includes: performing communication by comprehensively using a second frequency band 102, a third frequency band 103 and a fifth frequency band 105: receiving signals synchronously from the base station and the terminal in a first time interval and sending signals synchronously to the base station and the terminal in a second time interval. In order to prevent interference on the terminal which directly communicates with the base station, in the process in which the wireless relay device synchronously sends data to the terminal and the base station and synchronously receives data from the terminal and the base station, a time slot is specifically allocated to the terminal which communicates with the base station via the wireless relay device, namely the time slot allocated to the terminal which communicates with the base station via the wireless relay device is different from that allocated to the terminal which directly communicates with the base station. A variety of combinations of the second frequency band 102, the third frequency band 103 and the fifth frequency band 105 can be used flexibly for receiving data synchronously from the base station and the terminal in the first time interval and for sending data synchronously to the base station and the terminal in the second time interval if the above-mentioned conflict is not caused.

Below is description on several preferred implementation modes of the second frequency band 102, the third frequency band 103 and the fifth frequency band 105:

mode 1: in the first time interval, receiving signals from the base station at the third frequency band 103 and synchronously receiving signals from the terminal at the fifth frequency band 105; and

in the second time interval, sending signals to the base station at the fifth frequency band 105 and synchronously sending signals to the terminal at the third frequency band 105;

in this mode, the third frequency band 103 and the fifth frequency band 105 are unidirectionally used for the base station or the terminal, and the use of the third frequency band 103 and the fifth frequency band 105 is the same as that in the macro cell covering the third frequency band 103 and the fifth frequency band 105, but two guard bands are synchronously used in the first time interval and the second time interval, which is different from the case in which only one guard band can be used in one time interval in the prior art;

mode 2: in the first time interval, receiving signals from the base station at the third frequency band 103 and synchronously receiving signals from the terminal at the fifth frequency band 105; and

in the second time interval, sending signals synchronously to the base station and the terminal at the fifth frequency band 105;

in this mode, signals are received synchronously from the base station and the terminal by using unidirectionality of the third frequency band 103 and the fifth frequency band 105 in the first time interval; and the fifth frequency band 105 is bidirectionally used in the second time interval; the third frequency band 103 and the fifth frequency band 105 are synchronously used in one time interval, namely the first time interval, therefore the utilization rate of the guard band is increased;

mode 3: in the first time interval, receiving signals synchronously from the base station and the terminal at the third frequency band 103; and

in the second time interval, sending signals to the base station at the fifth frequency band 105 and synchronously sending signals to the terminal at the third frequency band 103;

in this mode, the third frequency band 103 is bidirectionally used in the first time interval, and signals are sent synchronously to the base station and the terminal by using unidirectionality of the third frequency band 103 and the fifth frequency band 105 in the second time interval; the third frequency band 103 and the fifth frequency band 105 are synchronously used in one time interval, namely the second time interval, therefore the utilization rate of the guard band is increased;

mode 4: in the first time interval, receiving signals synchronously from the base station and the terminal at the third frequency band 103; and

in the second time interval, sending signals to the base station at the second frequency band 102 or at the second frequency band 102 and the fifth frequency band 105 and sending signals to the terminal at the third frequency band 103;

in this mode, the third frequency band 103 is bidirectionally used in the first time interval, and in the second time interval, in addition to sending signals synchronously to the base station and the terminal by using the unidirectionality of the third frequency band 103 and the fifth frequency band 105 as that in the above-mentioned mode 3, the second frequency band 102 is also used to send signals to the base station; the use of the guard band and the use of the second frequency band 102 are combined, as the time slot does not conflict with that for the direct communication between the terminal and the base station, the utilization rate of the frequency band is increased in the case in which direct communicating with the base station and communicating with the base station via the wireless relay device are not influenced; and

mode 5: in the first time interval, receiving signals synchronously from the base station and the terminal at the third frequency band 103 or at the second frequency band 102 and the third frequency band 103; and

in the second time interval, sending signals to the base station at the second frequency band 102 or at the second frequency band 102 and the fifth frequency band 105 and synchronously sending signals to the terminal at the third frequency band 103;

in this mode, the second frequency band 102 is introduced in both data transmission to the base station and data transmission to the terminal; the utilization rate of the frequency band is further increased in the case in which direct communicating with the base station and communicating with the base station via the wireless relay device are not influenced.

The mentioned above are five kinds of frequency band utilization modes in which the second frequency band 102, the third frequency band 103 and the fifth frequency band 105 are comprehensively used, in the case in which the time slot allocated to the terminal communicating with the terminal via the wireless relay device is different to that allocated to the terminal direct communicating with the base station; certainly, the frequency band utilization modes implemented in the art, in which the second frequency band 102, the third frequency band 103 and the fifth frequency band 105 are combined, are not limited to these mentioned above, and other combined frequency band utilization modes which can be devised are also within the protection scope of the disclosure.

Below is a specific example of a communication carried out between the base station and the terminal via a wireless device.

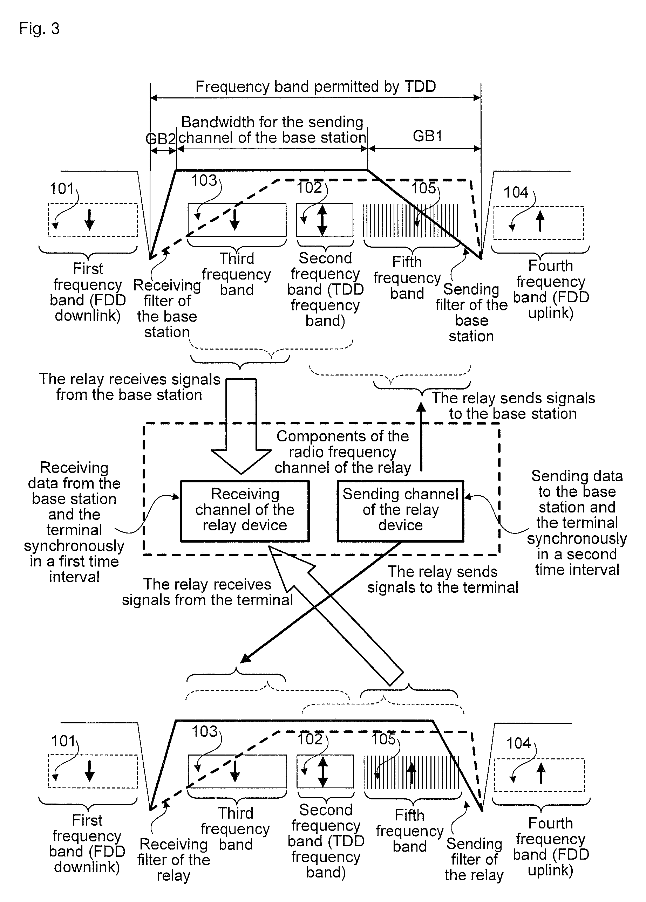

In this example, the process is described as the above-mentioned mode 1, wherein the first receiving channel 201 is configured at the third frequency band 103 or configured at the third frequency band 103 and the second frequency band 102, the second receiving channel 202 is configured at the fifth frequency band 105 or configured at the fifth frequency band 105 and the second frequency band 102, the first sending channel 203 is configured at the fifth frequency band 105 or configured at the fifth frequency band 105 and the second frequency band 102, and the second sending channel 204 is configured at the third frequency band 103 or configured at the third frequency band 103 and the second frequency band 102; and the first receiving channel 201 and the first sending channel 203 respectively employ a unidirectional receiving mode and a unidirectional sending mode. As show in Fig. 3, wherein

in the first time interval, first data is received by the first receiving channel 201 from the base station at the third frequency band 103 and synchronously second data is received from the terminal at the fifth frequency band 105; and in the second time interval, the second data is sent by the first sending channel 203 to the base station at the fifth frequency band 105 and synchronously the first data is sent by the second sending channel 204 to the terminal at the third frequency band 103. Certainly, the use of the second frequency band 102 may also be combined, and the specific combination modes obtained are not repeated herein.

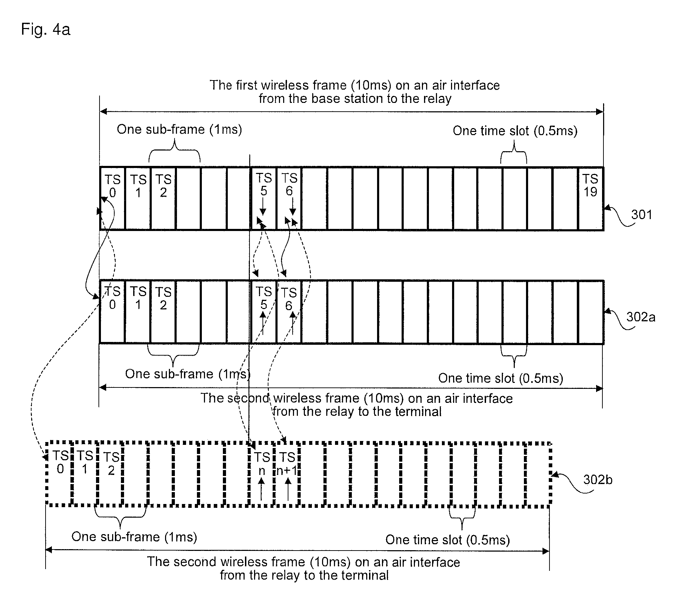

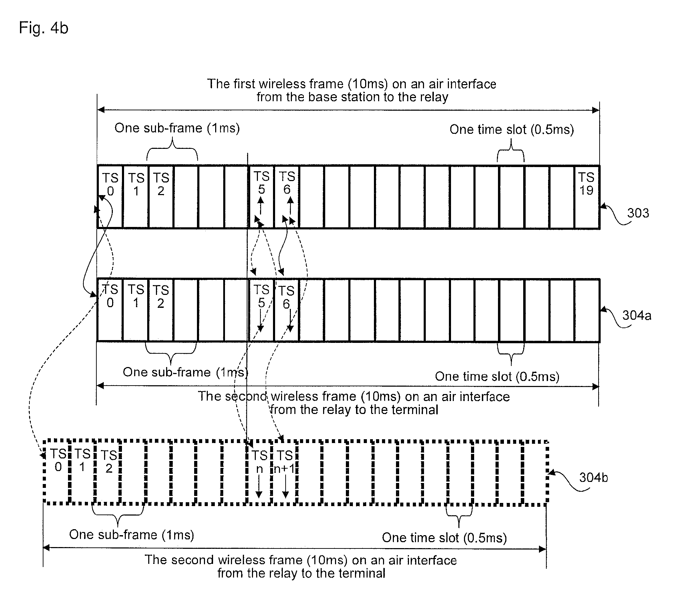

This embodiment is for the case in which a first wireless frame on an air interface from the base station to the wireless relay device is synchronous in time with a second wireless frame on the air interface from the relay to the terminal, namely the uplink time slot of the first wireless frame is overlapped with the downlink time slot of the second wireless frame, and the downlink time slot of the first wireless frame is overlapped with the uplink time slot of the second wireless frame. In order to prevent influence on the terminal which directly communicates with the base station in the process in which the wireless relay device sends data synchronously to the terminal and the base station and receives data synchronously from the terminal and the base station, the time slot allocated to the terminal which communicates with the base station via the wireless relay device, is different from that allocated to the terminal which directly communicates with the base station. Fig. 4a and Fig. 4b show the synchronous relationship between the first wireless frame and the second wireless frame. The first wireless frame 301 is synchronous in time with the second wireless frame 302a, the uplink time slots of the first wireless frame 301 are substantially overlapped correspondingly with the downlink time slots of the second wireless frame 302a, namely the time relationship between 302a and 301 in Fig. 4a, or a constant time delay is kept, namely the time relationship between 302b and 301 in Fig. 4a. On this premise, the terminal which communicates with the base station via the wireless relay device sends signals to the wireless relay device at a first group of uplink time slots of the second wireless frame, which are overlapped with a first group of downlink time slots of the first wireless frame on the air interface of the base station, namely at the TS5/TS6 shown in Fig. 4a; and the terminal which communicates with the base station via the wireless relay device sends signals to the wireless relay device at the first group of downlink time slots of the second wireless frame that are overlapped with the first group of uplink time slots of the first wireless frame on the air interface of the base station, namely at the TS5/TS6 shown in Fig. 4b. The terminal directly communicates with the base station at a second group of time slots of the second wireless frame other than the first group of uplink time slots and the first group of downlink time slots.

In accordance with the third embodiment of the disclosure, another wireless relay device is provided.

As shown in Fig. 2, the wireless relay device provided by this embodiment includes: a first receiving channel 201 configured to receive signals from a base station or from the base station and a terminal, a second receiving channel 202 configured to receive signals from the terminal, a first sending channel 203 configured to send signals to the base station or to the base station and the terminal, and a second sending channel 204 configured to send signals to the terminal; the wireless relay device further includes a radio frequency control unit configured to, during communicating with the base station and the terminal, control the first receiving channel 201, the second receiving channel 202, the first sending channel 203 and the second sending channel 204 to use frequency bands in the following mode:

the first receiving channel 201 receives signals at a third frequency band 103 or at the third frequency band 103 and a second frequency band 102; the second receiving channel 202 receives signals at a fifth frequency band 105 or at the fifth frequency band 105 and the second frequency band 102; the first sending channel 203 sends signals at the fifth frequency band 105 or at the fifth frequency band 105 and the second frequency band 102; and the second sending channel 204 sends signals at the third frequency band 103 or at the third frequency band 103 and the second frequency band 102; first data is received from the base station in a first time interval; the first data is sent to the terminal in a second time interval; second data is received from the terminal in a third time interval; the second data is sent to the base station in a fourth time interval, wherein the third frequency band 103 or the fifth frequency band 105 is synchronously used in the second interval and the third time interval, and the third frequency band and the fifth frequency band are two unilateral guard bands between the working frequency band of an FDD system and the second frequency band serving as the working frequency band of a TDD system.

The explanation on the sending and receiving modes of the first receiving channel 201, the second receiving channel 202, the first sending channel 203 and the second sending channel 204 in this embodiment are the same as that in the first embodiment, and signals receiving and sending can be performed by flexibly using the frequency bands configured in corresponding receiving and sending modes. In this embodiment, the wireless relay device does not synchronously receive signals from the base station and the terminal, and does not synchronously send signals to the base station and the terminal, which are different from that in the first embodiment. In the case in which data are not synchronously received and sent, the third frequency band 103 or the fifth frequency band 105 is synchronously used through the uplink time slot and downlink time slot of the terminal. The utilization rate of the guard band is increased, compared with the prior art in which the terminal can only receive signals at the third frequency band 103 and can only send signals at the fifth frequency band 105. In addition, the use of the second frequency band 102 can be combined to further increase the utilization rate of the frequency band.

The wireless relay device provided in this embodiment is suitable to serve as a wireless relay device deployed at a wireless access point covered by a macro cell and a wireless relay device covered by a micro cell. The wireless relay device uses a part of the downlink time slots of a wireless frame on an air interface in a wireless node of a macro cell as a first time interval to receive first data from the base station, uses the other part of the downlink time slots of the wireless frame on the air interface as a second time interval to send the first data to the terminal, uses a part of the uplink time slots of the wireless frame on the air interface in the wireless node of the macro cell as a third time interval to receive second data from the terminal, and uses the other part of the uplink time slots of the wireless frame on the air interface in the wireless node of the macro cell as a fourth time interval to send the second data to the base station. Therefore, the first time interval and the second time interval are different downlink time slots of one wireless frame on the air interface, and the third time interval and the fourth time interval are different uplink time slots of one wireless frame on the air interface.

In this embodiment, the radio frequency control unit is specially configured to, during the communicating between the base station and the terminal, perform controlling in any one of the following mode:

in the first time interval, controlling the first receiving channel 201 to receive first data from the base station at the third frequency band 103;

in the second time interval, controlling the second sending channel 204 to send the first data to the terminal at the third frequency band 103 or controlling the first sending channel 203 to send the first data to the terminal at the fifth frequency band 105;

in the third time interval, controlling the first receiving channel 201 to receive second data from the terminal by employing the third frequency band 103 that is used in the second time interval or controlling the second receiving channel 204 to receive second data from the terminal by employing the fifth frequency band 105 that is used in the second time interval;

in the fourth time interval, controlling the first sending channel 203 to send the second data to the base station at the fifth frequency band 105 or controlling the first sending channel to send the second data to the base station at the second frequency band 102 and the fifth frequency band 105.

In the case in which it is ensured that the third frequency band 103 is synchronously used in the second time interval and the third time interval to send signals to the terminal or receive signals from the terminal or the fifth frequency band 105 is synchronously used in the second time interval and the third time interval to send signals to the terminal or receive signals from the terminal, the frequency bands for receiving and sending signals in other time intervals can be flexibly configured by using the receiving and sending modes and frequency band utilization modes defined by the disclosure, and such flexible configurations will not be exhaustively listed herein one by one.

In addition, in the wireless relay device provided in this embodiment, the first receiving channel 201, the second receiving channel 202, the first sending channel 203 and the second sending channel 204 can be implemented by referring to the mode described in the first embodiment; similarly, the radio frequency control unit in the wireless relay device also includes a radio frequency switch unit 205 and a radio frequency switch switching control unit 206, of which the functions are identical to those described in the first embodiment and the switching modes according to the receiving and the sending modes and the frequency bands used are different those described in the first embodiment. In addition, the wireless relay device may further includes the antenna unit 207 described in the first embodiment.

In accordance with the forth embodiment of the disclosure, a method for the wireless relay device of the third embodiment to communicate with a base station and a terminal is provided.

In the method for the wireless relay device to communicate with the base station and the terminal in this embodiment, communication is performed by comprehensively using the second frequency band 102, the third frequency band 103 and the fifth frequency band 105: receiving first data from the base station in a first time interval; sending the first data to the terminal in a second time interval; receiving second data from the terminal in a third time interval; and sending the second data to the base station in a fourth time interval, wherein the third frequency band 103 is synchronously used in the second time interval and the third time interval or the fifth frequency band 103 is synchronously used in the second time interval and the third time interval. In this embodiment, the communication of the wireless relay device with the base station and the terminal is performed in an asynchronous way (that is, sending and receiving data asynchronously) which is different from the synchronous receiving and sending described in the second embodiment. The first time interval and the second time interval are different downlink time slots of one wireless frame on the air interface, and the third time interval and the fourth time interval are different uplink time slots of one wireless frame on the air interface.

In this embodiment, specifically, the second frequency band, the third frequency band and the fifth frequency band are comprehensively used to implementing the following communications:

in the first time interval, receiving the first data from the base station at the third frequency band 103;

in the second time interval, sending the first data to the terminal at the third frequency band 103 or the fifth frequency band 105;

in the third time interval, receiving the second data from the terminal by employing the third frequency band 103 or the fifth frequency band 105 which is the same as that used in the second time interval; and

in the fourth time interval, sending the second data to the base station at the fifth frequency band 105 or at the second frequency band 102 and the fifth frequency band 105.

In the case in which it is ensured that the third frequency band 103 is synchronously used in the second time interval and the third time interval to receive signals from the terminal and send signals to the terminal or the fifth frequency band 105 is synchronously used in the second time interval and the third time interval to receive signals from the terminal and send signals to the terminal, the frequency bands for receiving and sending signals in other time intervals can be flexibly configured by using the receiving and sending modes and frequency band utilization modes defined by the disclosure, and such flexible configurations will not be exhaustively listed one by one.

Preferably, sending the first data to the terminal at the third frequency band 103 in the second time interval and receiving the second data from the terminal at the third frequency band 103 in the third time interval are specifically as follows:

the bandwidth used to send the first data to the terminal at the third frequency band 103 is the same as that used to receive the second data from the terminal at the third frequency band 103, wherein the terminal works in a TDD mode; or

the bandwidth used to send the first data to the terminal at the third frequency band 103 is greater than that used to receive the second data from the terminal at the third frequency band 103, wherein the terminal works in a TDD mode. Namely, the terminal works in a generalized TDD mode: although the data are received and sent at different uplink and downlink time slots, the frequency bands used are not exactly identical.

Sending the first data to the terminal at the fifth frequency band 105 in the second time interval and receiving the second data from the terminal at the fifth frequency band 105 in the third time interval are specifically as follows:

the bandwidth used to send the first data to the terminal at the fifth frequency band 105 is the same as that used to receive the second data from the terminal at the fifth frequency band 105, wherein the terminal works in a TDD mode; or

the bandwidth used to send the first data to the terminal at the fifth frequency band 105 is less than that used to receive the second data from the terminal at the fifth frequency band 105, wherein the terminal works in a TDD mode. Namely, the terminal works in a generalized TDD mode: although the data are received and sent at different uplink and downlink time slots, the frequency bands used are not exactly identical.

Below is a specific example illustrating that the wireless relay device communicates with the base station and the terminal.

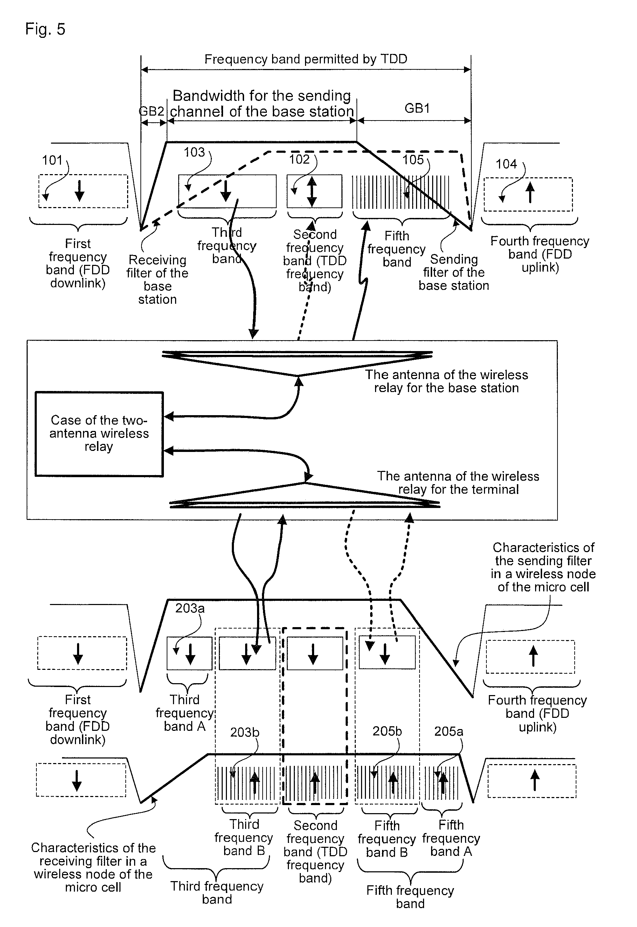

The wireless relay device provided in this embodiment serves as a wireless relay device deployed at a wireless access point covered by a macro cell and a wireless relay device covered by a micro cell. The wireless relay device uses a part of the downlink time slots of an wireless frame on the air interface in a wireless node of a macro cell as a first time interval to receive first data from the base station, uses the other part of the downlink time slots of the wireless frame on the air interface as a second time interval to send the first data to the terminal, uses a part of the uplink time slots of the wireless frame on the air interface in the wireless node of the macro cell as a third time interval to receive second data from the terminal, and uses the other part of the uplink time slots of the wireless frame on the air interface in the wireless node of the macro cell as a fourth time interval to send the second data to the base station. The first time interval and the second time interval are different downlink time slots of one wireless frame on the air interface, and the third time interval and the fourth time interval are different uplink time slots of one wireless frame on the air interface. As show in Fig. 5,

the process for the base station to send the first data to the terminal is as follows:

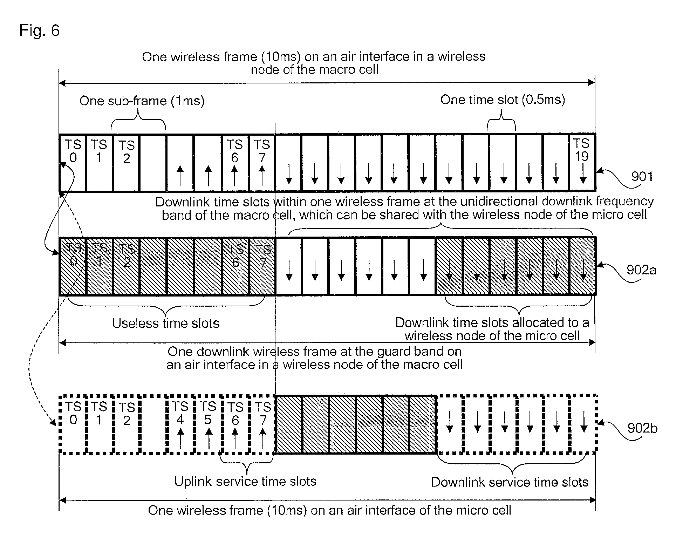

the first receiving channel 201 receives the first data from the base station at the third frequency band 103, in a first part of the downlink time slots of a wireless frame 901 on an air interface in a wireless node of a macro cell, which serves as the first time interval, namely the downlink time slots of a downlink wireless frame 902a on an air interface in the wireless node of the macro cell at a guard band, such as the time slots of the wireless frame 902a in Fig. 6 which has no shadow;

the second sending channel 204 sends the first data to the terminal at the third frequency band 103, in a second part of the downlink time slots of the wireless frame 901 on an air interface in a wireless node of a macro cell, which serves as the second time interval, namely the downlink time slots of a wireless frame 902b on an air interface of a micro cell, such as the downlink service time slots of the wireless frame marked in the wireless frame 902b in Fig. 6.

Specifically, the second sending channel 204 sends the first data to the terminal at the third frequency band 103 in one of the following modes:

1) sending the first data to the terminal at a sub-frequency band 203b of the third frequency band 103;

2) sending the first data to the terminal at the sub-frequency band 203b and a sub-frequency band 203a of the third frequency band 103.

The process for the base station to receive the second data from the terminal is as follows:

the first receiving channel 201 receives the second data from the terminal at the third frequency band 103, in a part of the uplink time slots of a wireless frame on an air interface in the wireless node of the macro cell, which serves as the third time interval, namely the first part of the uplink time slots of a wireless frame 902b, that is, the uplink service time slots (TS4, TS5) marked in the wireless frame 902b in Fig. 6;

specifically, the first receiving channel 201 receives the second data from the terminal at the third frequency band 103 in the following mode: receiving the second data from the terminal at a sub-frequency band 203b of the third frequency band 103, wherein the sub-frequency band 203a is used as a guard band, so as to prevent the terminal in a receiving state at a neighboring first frequency band 101 from being influenced by the terminal in a sending state at a sub-frequency band 203b.

The first sending channel 203 sends the second data to the base station at the fifth frequency band 105 or the second frequency band 102, in the other part of the uplink time slots of the wireless frame on the air interface in the wireless node of the macro cell, which serves as the fourth time interval, namely the uplink time slot (e.g. TS6) of the above-mentioned wireless frame 901.

The method and system provided by the disclosure applicable to TDD arrangement pattern is not limited to arrangement relationship shown in Fig. 1, for example, the wireless relay device and the method for the wireless relay device to communicate with the base station and the terminal according to the disclosure are also applicable to frequency spectrum arrangement patterns obtained by exchanging the locations of the fourth frequency band and the first frequency band and exchanging the locations of the third frequency band and the fifth frequency band.

Apparently, various modifications and variations can be devised by those skilled in the art without departing from the scope and the range of the disclosure. The disclosure intends to cover such modifications and variations, provided that these modifications and variations belong to the scope of the claims appended herein and the equivalent technique thereof.

### INDUSTRIAL APPLICABILITY

Through deploying a wireless relay device at a guard band between a TDD system and an FDD system, the disclosure implements the bidirectional relay communication between a base station and a terminal by using an idle guard band, which increases the utilization efficiency and the utilization flexibility of the guard band.

## Claims

1. A wireless relay device, comprising: a first receiving channel configured to receive signals from a base station or from the base station and a terminal, a second receiving channel configured to receive signals from the terminal, a first sending channel configured to send signals to the base station or to the base station and the terminal, and a second sending channel configured to send signals to the terminal, and further comprising:
a radio frequency control unit, configured to, during communicating with the base station and the terminal, control the first receiving channel, the second receiving channel, the first sending channel and the second sending channel to use frequency bands in the following mode:
receiving signals at a third frequency band or at the third frequency band and a second frequency band by the first receiving channel;
receiving signals at a fifth frequency band or at the fifth frequency band and the second frequency band by the second receiving channel;
sending signals at the fifth frequency band or at the fifth frequency band and the second frequency band by the first sending channel; and
sending signals at the third frequency band or at the third frequency band and the second frequency band by the second sending channel;
wherein there is a first time interval during the control of the radio frequency control unit, in the first time interval, the radio frequency control unit controls the receiving channel to receive signals synchronously from the base station and the terminal; and there is a second time interval during the control of the radio frequency control unit, in the second time interval, the radio frequency control unit controls the sending channel to send signals synchronously to the base station and the terminal,
wherein the third frequency band and the fifth frequency band are two guard bands between a working frequency band of a Frequency Division Duplex (FDD) system and the second frequency band serving as a working frequency band of a Time Division Duplex (TDD) system.

2. The wireless relay device according to claim 1, wherein
the radio frequency control unit is configured to control the first receiving channel, the second receiving channel, the first sending channel and the second sending channel in any one of the following modes:
mode 1: in the first time interval, controlling the first receiving channel to receive signals from the base station at the third frequency band and synchronously controlling the second receiving channel to receive signals from the terminal at the fifth frequency band; and
in the second time interval, controlling the first sending channel to send signals to the base station at the fifth frequency band and synchronously controlling the second sending channel to send signals to the terminal at the third frequency band;
mode 2: in the first time interval, controlling the first receiving channel to receive signals from the base station at the third frequency band and synchronously controlling the second receiving channel to receive signals from the terminal at the fifth frequency band; and
in the second time interval, controlling the first sending channel to send signals synchronously to the base station and the terminal at the fifth frequency band;
mode 3: in the first time interval, controlling the first receiving channel to receive signals synchronously from the base station and the terminal at the third frequency band; and
in the second time interval, controlling the first sending channel to send signals to the base station at the fifth frequency band and synchronously controlling the second sending channel to send signals to the terminal at the third frequency band;
mode 4: in the first time interval, controlling the first receiving channel to receive signals synchronously from the base station and the terminal at the third frequency band; and
in the second time interval, controlling the first sending channel to send signals to the base station at the second frequency band or at the second frequency band and the fifth frequency band and controlling the second sending channel to send signals to the terminal at the third frequency band; and
mode 5: in the first time interval, controlling the first receiving channel to receive signals synchronously from the base station and the terminal at the third frequency band or at the second frequency band and the third frequency band; and
in the second time interval, controlling the first sending channel to send signals to the base station at the second frequency band or at the second frequency band and the fifth frequency band and synchronously controlling the second sending channel to send signals to the terminal at the third frequency band.

3. The wireless relay device according to claim 1 or 2, wherein
the first receiving channel and the second receiving channel are two independent receiving channels which respectively receive signals through different power amplifiers; or
the first receiving channel and the second receiving channel are different sub-channels of a same broadband amplifier which covers the second frequency band, the third frequency band and the fifth frequency band.

4. The wireless relay device according to claim 1 or 2, wherein
the first sending channel and the second sending channel are two independent sending channels which respectively send signals through different power amplifiers; or
the first sending channel and the second sending channel are different sub-channels of a same broadband amplifier which covers the second frequency band, the third frequency band and the fifth frequency band.

5. The wireless relay device according to claim 1 or 2, wherein the radio frequency control unit comprises:
a radio frequency switch switching control unit, configured to determine the frequency bands used by the first receiving channel, the second receiving channel, the first sending channel and the second sending channel, and link relationships with antennas, and to send a switching control signal for controlling switching between different frequency bands and switching between links with the antennas; and
a radio frequency switch unit, configured to switch between the frequency bands used by the first receiving channel, the second receiving channel, the first sending channel and the second sending channel and switch between the link relationships with the antennas according to the switching control signal.

6. The wireless relay device according to claim 5, wherein the radio frequency switch unit is configured to switch in the following mode:
switching between an antenna for the base station and an antenna for the terminal by the first receiving channel;
switching between the antenna for the base station and the antenna for the terminal by the first sending channel;
switching between sending to the terminal and receiving from the terminal at the third frequency band by the first receiving channel and the second sending channel; and
switching between sending to the terminal and receiving from the terminal at the fifth frequency band by the first sending channel and the second receiving channel.

7. The wireless relay device according to claim 5, wherein
the radio frequency switch switching control unit is configured to determine the used frequency band and the link relationship with the antenna according to the following information:
a bandwidth for communication between the wireless relay device and the terminal;
a bandwidth for communication between the wireless relay device and the base station; and
uplink-downlink time slot conversion points for a first wireless frame between the wireless relay device and the base station and a second wireless frame between the wireless relay device and the terminal.

8. The wireless relay device according to any of claims 1-7, further comprising: an antenna unit configured to implement signal sending and receiving for the base station and the terminal, wherein
the antenna unit is one or a group of omni-directional antennas of which the frequency band covers the second frequency band, the third frequency band or the fifth frequency band; or
the antenna unit comprises: one or a group of directional antennas for the base station, of which the frequency band covers the second frequency band, the third frequency band and the fifth frequency band, and one or a group of directional antennas for the terminal, of which the frequency band covers the second frequency band, the third frequency band and the fifth frequency band.

9. A method for the wireless relay device according to claim 1 to communicate with a base station and a terminal, comprising:
communicating by comprehensively using a second frequency band, a third frequency band and a fifth frequency band, wherein receiving signals synchronously from the base station and the terminal by the wireless relay device in a first time interval, and sending signals synchronously to the base station and the terminal by the wireless relay device in a second time interval.

10. The method according to claim 9, wherein
the step of communicating by comprehensively using the second frequency band, the third frequency band and the fifth frequency band employs any one of the following communication modes:
mode 1: in the first time interval, receiving signals from the base station at the third frequency band and synchronously receiving signals from the terminal at the fifth frequency bands; and
in the second time interval, sending signals to the base station at the fifth frequency band and synchronously sending signals to the terminal at the third frequency band;
mode 2: in the first time interval, receiving signals from the base station at the third frequency band and synchronously receiving signals from the terminal at the fifth frequency band; and
in the second time interval, sending signals synchronously to the base station and the terminal at the fifth frequency band;
mode 3: in the first time interval, receiving signals synchronously from the base station and the terminal at the third frequency band; and
in the second time interval, sending signals to the base station at the fifth frequency band and synchronously sending signals to the terminal at the third frequency band;
mode 4: in the first time interval, receiving signals synchronously from the base station and the terminal at the third frequency band; and
in the second time interval, sending signals to the base station at the second frequency band or at the second frequency band and the fifth frequency band and sending signals to the terminal at the third frequency band; and
mode 5: in the first time interval, receiving signals synchronously from the base station and the terminal at the third frequency band or at the second frequency band and the third frequency band; and
in the second time interval, sending signals to the base station at the second frequency band or at the second frequency band and the fifth frequency band and synchronously sending signals to the terminal at the third frequency band.

11. A wireless relay device, comprising: a first receiving channel configured to receive signals from a base station or from the base station and a terminal, a second receiving channel configured to receive signals from the terminal, a first sending channel configured to send signals to the base station or to the base station and the terminal, a second sending channel configured to send signals to the terminal, and further comprising:
a radio frequency control unit, configured to, during communicating with the base station and the terminal, control the first receiving channel, the second receiving channel, the first sending channel and the second sending channel to use frequency bands in the following mode:
receiving signals at a third frequency band or at the third frequency band and a second frequency band by the first receiving channel;
receiving signals at a fifth frequency band or at the fifth frequency band and the second frequency band by the second receiving channel;
sending signals at the fifth frequency band or at the fifth frequency band and the second frequency band by the first sending channel; and
sending signals at the third frequency band or at the third frequency band and the second frequency band by the second sending channel;
wherein the radio frequency control unit controls receiving of first data from the base station in a first time interval, and sending of the first data to the terminal in a second time interval, and receiving of second data from the terminal in a third time interval, and sending of the second data to the base station in a fourth time interval, wherein the third frequency band is used synchronously in the second time interval and the third time interval or the fifth frequency band is used synchronously in the second time interval and the third time interval, and the third frequency band and the fifth frequency band are two guard bands between a working frequency band of an FDD system and the second frequency band serving as a working frequency band of a TDD system.

12. The wireless relay device according to claim 11, wherein
the radio frequency control unit is configured to control the first receiving channel, the second receiving channel, the first sending channel and the second sending channel in the following mode:
in the first time interval, controlling the first receiving channel to receive the first data from the base station at the third frequency band;
in the second time interval, controlling the second sending channel to send the first data to the terminal at the third frequency band or controlling the first sending channel to send the first data to the terminal at the fifth frequency band;
in the third time interval, controlling the first receiving channel to receive the second data from the terminal at the third frequency band which is the same as that used in the second time interval or controlling the second receiving channel to receive the second data from the terminal at the fifth frequency band which is the same as that used in the second time interval; and
in the fourth time interval, controlling the first sending channel to send the second data to the base station at the fifth frequency band or controlling the first sending channel to send the second data to the base station at the second frequency band and the fifth frequency band.

13. A method for the wireless relay device according to claim 11 to communicate with a base station and a terminal, comprising:
communicating by comprehensively using a second frequency band, a third frequency band and a fifth frequency band, wherein
receiving first data from the base station in a first time interval;
sending the first data to the terminal in a second time interval;
receiving second data from the terminal in a third time interval;
sending the second data to the base station in a fourth time interval;
wherein the third frequency band is used synchronously in the second time interval and the third time interval or the fifth frequency band is used synchronously in the second time interval and the third time interval.

14. The method according to claim 13, wherein
the step of communicating by comprehensively using the second frequency band, the third frequency band and the fifth frequency band comprises:
receiving the first data from the base station at the third frequency band in the first time interval;
sending the first data to the terminal at the third frequency band or the fifth frequency band in the second time interval;
receiving, in the third time interval, the second data from the terminal at the third frequency band or the fifth frequency band which is the same as that used in the second time interval; and
sending the second data to the base station at the fifth frequency band or at the second frequency band and the fifth frequency band in the fourth time interval.

15. The method according to any one of claims 13-14, wherein
the first time interval and the second time interval are different downlink time slots in one wireless frame period, and the third time interval and the fourth time interval are different uplink time slots in one wireless frame period.

16. The method according to any one of claims 13-14, wherein
in the steps of sending the first data to the terminal at the third frequency band in the second time interval and receiving the second data from the terminal at the third frequency band in the third time interval,
a bandwidth used to send the first data to the terminal at the third frequency band is the same as that used to receive the second data from the terminal at the third frequency band, wherein the terminal works in a TDD mode; or
the bandwidth used to sent the first data to the terminal at the third frequency band is greater than that used to receive the second data from the terminal at the third frequency band, wherein the terminal works in the TDD mode.

17. The method according to any one of claims 13-14, wherein
in the steps of sending the first data to the terminal at the fifth frequency band in the second time interval and receiving the second data from the terminal at the fifth frequency band in the third time interval,
a bandwidth used to send the first data to the terminal at the fifth frequency band is the same as that used to receive the second data from the terminal at the fifth frequency band, wherein the terminal works in a TDD mode; or
the bandwidth used to sent the first data to the terminal at the fifth frequency band is less than that used to receive the second data from the terminal at the fifth frequency band, wherein the terminal works in the TDD mode.
